# EUROPÄISCHE PATENTANMELDUNG

(11) **EP 4 063 108 A1**
(43) Veröffentlichungstag der Anmeldung: **28.09.2022**
(21) Anmeldenummer: 22174187.9
(22) Anmeldetag: 20.09.2016
(51) Int. Cl.: B29D 99/00, B29C 65/50, B29C 65/00, E06B 1/62

(54) **VERFAHREN ZUM HERSTELLEN EINES ABDICHTBANDS UND ABDICHTBAND**

(30) Priorität: 01.10.2015 DE 102015116667
(62) Teilanmeldung aus: 16189633.7
(71) Anmelder: Tremco CPG Germany GmbH, 92439 Bodenwöhr (DE)
(72) Erfinder: Wörmann, Frank, Bergkamen (DE); Komma, Markus, Burglengenfeld (DE); Eidenhardt, Thomas, Bruck (DE)
(74) Vertreter: Bittner, Bernhard

(57) **Zusammenfassung**

Verfahren zum Herstellen eines Abdichtbandes (1) mit den Schritten:
- Bereitstellen eines bandförmigen Grundträgers (2), wobei dieser Grundträger einen flexiblen Kunststoff aufweist;
- Transportieren dieses Grundträgers (2) entlang eines vorgegebenen Transportpfades (T);
- Einbringen wenigstens eines Spalts in diesen Grundträger (2), wobei sich dieser Spalt entlang der Transportpfads (T) erstreckt und wobei dieser Spalt den Grundträger in wenigstens zwei vollständig voneinander beabstandete Grundträgerabschnitte (2a, 2b) trennt; Erfindungsgemäß wird in diesen Spalt ein Dichtelement (4) eingefügt, welches ein Trägermaterial (4a) aufweist und beidseitig mit einer Klebebeschichtung (4b, 4c) versehen ist.

## Beschreibung

Die vorliegende Erfindung bezieht sich auf ein Verfahren zum Herstellen eines Abdichtbandes und ein Abdichtband. Derartige Abdichtbänder, beispielsweise Fugendichtbänder, sind aus dem Stand der Technik seit langem bekannt. Diese können beispielsweise beim Einbau von Fenstern Anwendung finden. Üblicherweise weisen derartige Dichtbänder einen flexiblen Grundträger, beispielsweise aus einem Schaumstoff auf, der über ein Klebemittel, wie etwa ein doppelseitiges Klebeband an einem Bereich eines Fensters oder einer Fensteröffnung angebracht wird. In jüngerer Zeit werden jedoch stets höhere Anforderungen an die Dichtigkeit bzw. die Wärmedämmwirkung derartiger Bänder gestellt. Daher sind aus dem Stand der Technik auch Abdichtbänder bekannt, welche in dem Grundträger weitere insbesondere luftdichte Folien aufweisen. Die Herstellung derartiger Abdichtbänder ist im Stand der Technik jedoch relativ aufwendig. So werden beispielsweise mehrere doppelseitige Klebebänder eingesetzt um eine entsprechende Abdichtfolie in den Grundkörper zu integrieren.

Der vorliegenden Erfindung liegt daher die Aufgabe zugrunde, die Herstellung derartiger Abdichtbänder zu vereinfachen und auch entsprechend einfacher gestaltete Abdichtbänder zur Verfügung zu stellen.

Diese Aufgaben werden durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Herstellen eines Abdichtbandes wird zunächst ein bandförmiger Grundträger zur Verfügung gestellt, wobei dieser Grundträger ein flexibles Kunststoffmaterial und bevorzugt einen flexiblen Schaumstoff aufweist. Weiterhin wird dieser Grundträger entlang eines vorgegebenen Transportpfades transportiert. In einem weiteren Verfahrensschritt wird wenigstens ein Spalt in diesen Grundträger eingebracht, wobei sich dieser Spalt wenigstens abschnittsweise entlang des Transportpfads des Grundträgers erstreckt und wobei dieser Spalt den Grundträger in wenigstens zwei bevorzugt vollständig voneinander beabstandete und/oder getrennte Grundträgerabschnitte trennt. Bevorzugt wird dieser Spalt mittels eines Schneidmittels in den Grundkörper eingebracht, insbesondere wird der Grundkörper mittels des Schneidmittels wenigstens teilweise eingeschnitten.

Erfindungsgemäß wird in diesen Spalt ein Dichtelement eingeführt, welches ein Trägermaterial aufweist und beidseitig mit einer Klebebeschichtung versehen ist. Bevorzugt ist das Trägermaterial unmittelbar mit der Klebebeschichtung versehen. Dabei ist es denkbar, dass eine Dicke dieser Klebebeschichtung(en) höher ist als eine Dicke des Trägermaterials.

Es wird daher erfindungsgemäß ein vereinfachtes Verfahren zur Herstellung eines derartigen Abdichtbandes vorgeschlagen. Dieses beruht darauf, dass zunächst ein Spalt in den Grundträger eingebracht wird und in diesen Spalt wiederum ein Dichtelement, welches einen Träger und eine doppelseitige Klebebeschichtung aufweist. Insbesondere handelt es sich bei diesem Dichtelement um ein bandartiges Dichtelement, welches sich besonders bevorzugt in einem fertiggestellten Zustand des Abdichtbandes in der gleichen Richtung erstreckt wie der Grundträger.

Bei einem bevorzugten Verfahren werden mehrere Spalte in den Grundträger eingebracht, insbesondere mehrere zueinander parallele Spalte. Vorteilhaft handelt es sich hierbei jeweils um Spalte, die sich wenigstens abschnittsweise und bevorzugt vollständig entlang der Transportrichtung des Grundträgers erstrecken. Bevorzugt wird in mehrere dieser Spalte und besonders bevorzugt in alle diese Spalte jeweils ein Dichtelement der oben beschriebenen Art eingebracht.

Bei einem weiteren bevorzugten Verfahren handelt es sich bei dem flexiblen Schaumstoff um einen flexiblen PU-Schaumstoff. Insbesondere handelt es sich hierbei um einen imprägnierten Schaumstoff. Verfahrensseitig ist es also möglich, dass dieser Schaumstoff vor dem Schneiden bzw. dem Erzeugen des Spalts imprägniert wird. Besonders bevorzugt besteht der Grundkörper aus einem Polyurethan - Weichschaum, der mit einer Imprägnierung versehen wurde und insbesondere mit - bevorzugt wässrigen - Imprägnierungen getränkt und bevorzugt anschließend getrocknet wurde. Durch diese Imprägnierungen ist der Schaumstoff bedingt klebrig und damit auch verzögert rückstellend.

Bevorzugt wird das Dichtelement flächig bzw. vollflächig an die beiden Grundträgerabschnitte angeklebt.

Vorteilhaft liegt eine Höhe des Grundträgers bzw. eine Rohschaumhöhe in einem Bereich zwischen 20mm und 120mm, bevorzugt zwischen 30mm und 90mm.

Bei einem weiteren bevorzugten Verfahren werden aus dem nunmehr mit dem Dichtelement versehenen Grundträger bestimmte Materialbreiten abgeschnitten. Diese Materialbreiten können dabei zwischen 40mm und 100mm, bevorzugt zwischen 50mm und 90mm liegen. Dabei können auch die angegebenen unterschiedlichen Höhen mit unterschiedlichen Breiten, im Folgenden auch als Abstechbreiten bezeichnet, kombiniert werden. Es wäre dabei möglich, dass bei dem Herstellverfahren eine Schaumstoffbahn mit einer vorgegebenen Breite, beispielsweise 1000mm, zugeführt wird und durch die verschiedenen Abstechbreiten unterschiedliche Anzahlen von einzubringenden Folienstreifen entstehen. Dabei werden bevorzugt in einem Bearbeitungsprozess immer gleiche Breiten nebeneinander in einer Schaumstoffbahn verwendet.

Bevorzugt erfolgt dieses Abschneiden der Materialbreiten durch ein sog. Abstechen. Bevorzugt werden, wie unten genauer erläutert, dabei die auf eine rotierende Achse aufgesteckten Ausgangsrollen werden durch ein tangential eintauchendes, rotierendes Messer in die gewünschte Breite geschnitten. Vorteilhaft sind hierbei die große Flexibilität und die sehr schnelle Individualisierung der Schnittbreite, was gerade bei häufig wechselnden Kundenaufträgen vorteilhaft ist. Dieses Abstechen findet bevorzugt an Positionen statt, welche von denjenigen der eingefügten Spalte verschieden sind.

Bei einem weiteren bevorzugten Verfahren werden Verfahrensschritte, wie das Schneiden und das Einfügen des Dichtelements, in einem unkomprimierten Zustand der Grundträgers durchgeführt. Bevorzugt wird also der Grundträger in einem (insbesondere in seiner Höhe unkomprimierten Zustand) transportiert.

Bei einem weiteren bevorzugten Verfahren weisen die beiden Grundträgerabschnitte unterschiedliche Breiten auf. Dies bedeutet, dass der besagte Spalt bevorzugt bezüglich der Breitenrichtung nicht mittig angeordnet wird, sondern hierzu versetzt. So kann beispielsweise einer der Grundträgerabschnitte eine Teilbreite von 1/3 und der andere eine Teilbreite von 2/3 bezogen auf die Gesamtbreite des späteren Produkts aufweisen.

Verfahrensseitig kann dabei die imprägnierte Schaumbahn in zwei oder mehrere Streifen getrennt werden. Bei diesem Auftrennen werden - wie oben erwähnt - nicht die späteren Außenkanten des fertigen Produkts gebildet, sondern die Spalte für das Einlegen des Dichtelements, welches auch als funktionelle Folie bezeichnet werden kann. Wie erwähnt, soll dabei das Dichtelement nicht mittig, sondern versetzt zu der Mitte, beispielsweise in einem Verhältnis von 1:3 zu 2:3 über die Breite des späteren Produkts positioniert werden. Nach dem Einbringen des Dichtelements werden die vorher geschnittenen Streifen einschließlich des dazwischenliegenden Dichtelements wieder zusammengeführt und - wie unten genauer erwähnt - zum Zwecke der Selbstklebung aneinandergedrückt, um einen Zusammenhalt der Bahn für die weiteren Fertigungsprozesse zu erreichen.

Bevorzugt erstreckt sich der bandförmige Grundkörper in einer bzw. der oben angegebenen Transportrichtung. Diese Richtung wird im Folgenden auch als Längsrichtung bezeichnet. Daneben weist der Grundträger auch eine vorgegebene Breite in einer hierzu senkrechten Richtung, im Folgenden als Querrichtung bezeichnet, auf. Vorteilhaft erstrecken sich die Dichtbänder jeweils in der Längsrichtung und damit bevorzugt senkrecht zu der besagten Querrichtung.

Daneben weist der Grundträger auch eine vorgegebene Höhe auf, d. h. eine Ausdehnung in einer Richtung, welche senkrecht zu der Transportrichtung und auch senkrecht zu der Querrichtung steht. Bevorzugt ist der Grundträger jedenfalls in dieser Höhenrichtung flexibel.

Bei einem weiteren vorteilhaften Verfahren handelt es sich bei dem Dichtelement um ein gasundurchlässiges und insbesondere luftundurchlässiges Dichtelement. Dieses Dichtelement kann dabei genauer durch einschlägige Prüfbestimmungen definiert sein. Durch die Verwendung eines derartigen Dichtelements wird insgesamt die Abdichtwirkung des entstehenden Dichtbandes erheblich erhöht.

Bei einem weiteren bevorzugten Verfahren wird das Band bzw. der Grundträger anschließend in der oben erwähnten Höhenrichtung gepresst. Bevorzugt wird das Band nach diesem Pressen aufgerollt. Im Ergebnis kann damit dieses Abdichtband als Rolle zur Verfügung gestellt werden.

Bevorzugt wird durch dieses Pressen in der Höhenrichtung die Höhe des Grundkörpers mit dem darin eingelegten Dichtelement um wenigstens 50% reduziert, bevorzugt um wenigstens 70% und besonders bevorzugt um wenigstens 80%. Durch diesen Prozess wird bevorzugt das in dem Grundkörper einliegende Dichtelement gestaucht bzw. gefaltet. Die Anmelderin hat jedoch herausgefunden, dass auch durch diesen Prozess die Anhaftwirkung bzw. der Zusammenhalt zwischen dem Grundkörper und dem Dichtelement nicht wesentlich beeinträchtigt wird. Umgekehrt kann sich in der Benutzung der Grundkörper wieder ausdehnen, ohne hierbei durch das eingelegte Dichtelement behindert zu werden.

Bei einem weiteren vorteilhaften Verfahren wird wenigstens ein Grundträgerabschnitt und werden bevorzugt beide Grundträgerabschnitte an das Dichtelement angedrückt. Dies kann beispielsweise dadurch erfolgen, dass die Grundträgerabschnitte in der besagten Querrichtung zusammengepresst werden. Auf diese Weise kann die Haftung zwischen den Grundträgerabschnitten und dem Dichtelement erhöht werden. Insbesondere entsteht auf diese Weise ein Verbund zwischen den Grundträgerabschnitten und dem Dichtelement. Weiterhin ist es auch möglich, wie oben erwähnt, dass mehrere Dichtelemente in entsprechende Spalte eingefügt werden und anschließend das Dichtband, genauer die so gebildete Bahn in der besagten Querrichtung gepresst wird. Auf diese Weise kann der oben erwähnte sichere Verbund zwischen dem Grundträger und den Dichtelementen ausgebildet werden.

Bei einer weiteren vorteilhaften Ausführungsform erfolgt das Zusammendrücken in einer zu dem Transportpfad bzw. zu der Transportrichtung senkrechten Richtung, bei der es sich insbesondere um die oben genannte Querrichtung handelt.

Bei einem weiteren bevorzugten Verfahren wird der entstehende Spalt nach dem Einbringen durch ein Aufweitungsmittel aufgeweitet. So kann beispielsweise in den Spalt ein Element eingefügt werden, welches bei einem Transport des Grundkörpers eine Aufweitung des Spaltes ermöglicht. So kann beispielsweise ein schwertartiger Körper eingefügt werden, der diese Aufweitung erreicht. Allgemein kann das Schneidmittel, welches den Spalt in den Grundkörper einbringt, auch diesen so erzeugten Spalt aufweiten. Daneben kann jedoch auch ein zusätzliches Aufweitungsmittel vorgesehen sein. So könnten beispielsweise Schienen oder Rollen vorgesehen sein, welche einen erzeugten Spalt aufweiten oder zumindest eine bestimmte Spaltbreite beibehalten.

In diesen (insbesondere aufgeweiteten) Spalt kann, wie oben erwähnt, das Dichtelement eingefügt werden. Bevorzugt wird der Grundträger derart transportiert, dass er nicht in seiner Querrichtung verschoben wird. So können bevorzugt zwar Spalte eingebracht werden, die Ränder des Grundträgers verschieben sich jedoch bevorzugt in diesem Bereich nicht gegenüber einer Transporteinrichtung. Vorteilhaft wird zum Transportieren des Grundträgers ein umlaufendes Transportmittel, wie beispielsweise ein Transportband oder eine Transportkette verwendet. Zum Einfügen des Spaltes wird besonders bevorzugt ein Schneidmittel, wie insbesondere ein Messer verwendet. Dabei wäre es möglich, dass ein bewegliches Messer verwendet wird, welches den Grundkörper in der Art einer Säge schneidet.

Es wäre jedoch auch möglich, dass es sich bei dem Schneidmittel um ein rotierendes Schneidmittel handelt, welches den Grundkörper in der Art einer Kreissäge schneidet. Bevorzugt rotiert das Schneidmittel dabei in einer vorgegebenen Drehrichtung, und zwar insbesondere in einer Drehrichtung, welche den ankommenden und zu schneidenden Grundkörper auf dessen Transporteinrichtung, wie etwa ein Transportband andrückt. Wird beispielsweise das Transportband von rechts nach links gefördert, so rotiert das Schneidmittel im Uhrzeigersinn. Bevorzugt wird zum Transportieren des Grundkörpers ein umlaufendes Transportmittel, wie insbesondere ein umlaufendes Transportband verwendet. Dieses Transportband kann bevorzugt eine raue Oberfläche aufweisen, so dass eine Reibung zwischen dem Transportband und dem Grundkörper erhöht wird.

Bei einem weiteren bevorzugten Verfahren wird vor dem Einführen des Dichtelements in den Spalt und insbesondere vor dem Verbinden des Dichtelements mit Bereichen des Grundträgers ein Abdeckelement von diesem Dichtelement abgetrennt. Vorteilhaft handelt es sich bei diesem Abdeckelement um einen sogenannten Liner, der ein Verkleben einander benachbarter Schichten verhindert. Dieser Liner wird besonders bevorzugt, wie oben erwähnt, abgezogen, bevor das Dichtelement an dem Grundkörper angeordnet wird. Dabei ist es möglich, dass das Dichtelement an/mit dem in Transportrichtung ersten Winkel der Schneide an eine Flanke des Grundkörpers angetragen und am zweiten Winkel der Liner abgezogen und (insbesondere nach oben) umgelenkt wird.)

Bei einem weiteren bevorzugten Verfahren wird in einem Bereich, in dem das Dichtelement in den Spalt eingeführt wird, wenigstens der Grundträger oder das Dichtelement entlang eines abgewinkelten oder gekrümmten Transportbandes geführt. Bei einer bevorzugten und unten noch genauer beschriebenen Ausgestaltung wird das Dichtelement um einen vorgegebenen Winkel, beispielsweise um 90° abgelenkt, um dann in der Transportrichtung des Grundträgers transportiert zu werden. Es wäre jedoch auch denkbar, nicht das Dichtelement umzulenken, sondern den Grundträger, um auf diese Weise zu erreichen, dass das Dichtelement wenigstens abschnittsweise in der Transportrichtung des Grundträgers transportiert wird. Bevorzugt wird der Spalt nach dem Einbringen des Dichtelements wieder verkleinert und/oder verengt.

So könnte beispielsweise das Transportband über zwei oder mehrere Umlenkrollen geführt werden, welche die Transportrichtung (beispielsweise um 90°) zu ändern.

Bei einem weiteren vorteilhaften Verfahren wird das Dichtelement mittels eines Umlenkträgers in den Spalt eingeführt, wobei bevorzugt das Dichtelement um diesen Umlenkträger umgelenkt wird. Dies bedeutet, dass bevorzugt der Spalt erzeugt wird und in diesen Spalt der Umlenkträger eingeführt wird. Dieser Umlenkträger kann dabei beispielsweise schwertartig gestaltet sein. So könnte beispielsweise diesem Umlenkträger das Dichtelement, insbesondere noch mit einem Liner, zugeführt werden, und während dieser Umlenkung um den Umlenkträger auch der Liner abgezogen und rückgeführt werden.

Bevorzugt ragt dabei dieser Umlenkträger in den Spalt hinein. So kann beispielsweise der Umlenkträger vollständig in den besagten Spalt hineinragen. Bei einem weiteren bevorzugten Verfahren erfolgt eine Umlenkung des Dichtelements bzw. dessen Förderrichtung um 90°. Vorteilhaft wird auch der ursprünglich auf dem Dichtelement angeordnete Liner wenigstens einmal und besonders bevorzugt wenigstens zweimal umgelenkt, wobei beispielsweise eine derartige Umlenkung um zweimal 90° erfolgen kann, sodass der Liner wieder zurückgeführt werden kann. Bevorzugt wird das Dichtelement mit einer Geschwindigkeit transportiert, welche an eine Transportgeschwindigkeit des Grundträgers angepasst ist. Bevorzugt wird das Dichtelement wenigstens abschnittsweise in der gleichen Transportrichtung transportiert wie der Grundträger.

Bei einem weiteren bevorzugten Verfahren wird das Dichtelement so in den Spalt eingeführt, dass nach dem Zusammenfügen mit den Grundträgerabschnitten das Dichtelement wenigstens einseitig über diese hinaussteht. Bei einem weiteren bevorzugten Verfahren wird dieser hinausstehende Abschnitt geknickt und/oder gefaltet und besonders bevorzugt an einem Bereich des Grundträgers angeklebt. Vorteilhaft entsteht beidseitig ein überragender Abschnitt und dieser wird jeweils umgefaltet und bevorzugt an dem Grundträger angeklebt.

Bei einem weiteren bevorzugten Verfahren wird auf dem mit Dichtelement versehenen Grundträger -insbesondere im Bereich des Überstandes - eine granulatförmige und insbesondere pulverförmige Substanz aufgebracht. Insbesondere handelt es sich hierbei um eine pulvrige Substanz, welche an der Klebeschicht des Dichtelements ankleben kann. Dieses pulverförmige Material reduziert jedoch bevorzugt die Klebewirkung des Dichtelements im Bereich des Überstandes.

Als pulvrige Substanz käme dabei beispielsweise ein Aluminiumhydroxidpulver (AL(OH)₃) in Frage. Es wären jedoch auch andere Substanzen denkbar, welche auf den Überstand der Klebeschicht des Dichtelements aufgebracht werden könnten.

Bevorzugt erfolgt daher ein Umklappen und Anpressen von Folienüberständen auf der Bandober- und unterseite. Die beschriebene pulvrige Substanz dient dazu, um die Selbstverklebung des Dichtelements bei schlaufenförmigem Ablegen der Bahn zu unterbinden. Bevorzugt werden die entsprechenden Stellen der Überstände mit dem genannten Material bepudert.

Am Ende des Verfahrens soll aus der ursprünglich imprägnierten Schaumbahn eine Bahn mit wenigstens einem eingelegtem Dichtelement, welches auch als funktioneller Folienstreifen bezeichnet werden kann, entstanden sein. Es wäre jedoch auch möglich mehrere derartiger Dichtelemente bzw. funktioneller Folienstreifen vorzusehen. Bevorzugt soll dabei eine unterschiedliche Anzahl von Dichtelementen in einer vorgegebenen Schaumstoffbahn möglich sein. Bevorzugt sollen dabei diese Dichtelemente so eingeführt werden, dass ein regelmäßiger und insbesondere auch gleichmäßiger Abstand der Dichtelemente untereinander besteht. Daneben sollen bevorzugt die Dichtelemente innerhalb der Schaumbahn parallel zueinander verlaufen. Daneben sollen diese Dichtelemente auch parallel zu einer Außenlängskante der Schaumbahn bzw. des Grundkörpers verlaufen. Daneben verlaufen die Dichtelemente auch rechtwinkelig zu einer Oberseite des Grundkörpers.

Vorteilhaft steht das Dichtelement in einem Bereich gegenüber der Bandoberseite über, der zwischen 5mm und 30mm, bevorzugt zwischen 10mm und 20mm und besonders bevorzugt zwischen 12mm und 16mm liegt. Bevorzugt steht der Folienstreifen (das Dichtelement) auch an der Bandunterseite in dem genannten Bereich über. Durch ein Umklappen der Überstände an dem Grundkörper wird erreicht, dass diese fest an diesem anhaften. Bevorzugt wird die Bepuderung auf den Bereich der umgeklappten Überstände begrenzt. Bevorzugt ist auch die gesamte Bahn des Grundkörpers mit dem wenigstens einen eingelegten Folienstreifen (Dichtelement) ausreichend fest für weitere Transport- und Fertigungsschritte.

Bei einem vorteilhaften weiteren Verfahren kann zunächst ein imprägnierter aber unkomprimierter Schaumstoff zur Verfügung gestellt werden, der in unterschiedliche Rohschaumhöhen (beispielsweise zwischen 30mm und 90mm) geschnitten werden kann. Daneben soll es auch möglich sein, unterschiedliche Foliendimensionen (Dichtelementbreiten) (Rohschaumhöhe + Überstände) in den Grundkörper einzuarbeiten. Bevorzugt wird der Grundkörper mit einer Geschwindigkeit transportiert, die zwischen 0,1 m/min und 10 m/min liegt. Bevorzugt liegt die Geschwindigkeit zwischen 0,2 m/min und 5 m/min.

Bei einem weiteren bevorzugten Verfahren wird die pulvrige Substanz, die auf dem Dichtelement aufgebracht wird, wenigstens teilweise in einem Kreislauf geführt. So kann beispielsweise ein Überschuss an pulvriger Substanz abgenommen und wieder dem Kreislauf zurückgeführt werden.

Bei einem weiteren vorteilhaften Verfahren wird der Grundkörper wenigstens teilweise und/oder wenigstens zeitweise während seines Transports mittels Niederhalteelementen in Richtung der Transporteinrichtung gedrängt. So kann beispielsweise ein derartiges Niederhalten unmittelbar vor dem Schneiden des Grundkörpers erfolgen und/oder unmittelbar nach dem Einbringen des Dichtelements.

Die vorliegende Erfindung bezieht sich weiterhin auf ein Abdichtband mit einem Grundträger, der ein flexibles (bahnförmiges) Schaumstoffmaterial aufweist. Dabei erstreckt sich dieser Grundträger entlang einer Längsrichtung und es sind wenigstens zwei Grundträgerabschnitte dieses Grundträgers durch ein Dichtelement voneinander getrennt und dieses Dichtelement erstreckt sich bevorzugt ebenfalls in der besagten Längsrichtung. Erfindungsgemäß weist das Dichtelement ein Trägermaterial auf, welches beidseitig mit einer Klebebeschichtung versehen ist, wobei die beiden Grundträgerabschnitte an diesem Dichtelement und insbesondere der Klebebeschichtung anhaften.

Im Gegensatz zum Stand der Technik wird daher vorgeschlagen, dass es sich bei dem Dichtelement um ein einstückiges bzw. einteiliges Element handelt. Auf diese Weise müssen keine weiteren Klebeschichten bzw. Klebestreifen eingefügt werden. Dabei kann dieses Dichtelement beispielsweise einen Basisträger aus einem Kunststoff oder einem Textil (Gewebe, Gelege, Gewirke) aufweisen, der wenigstens einseitig und bevorzugt zweiseitig mit der Klebebeschichtung versehen ist. Dieses einteilige Dichtelement kann sehr dünn hergestellt werden und gleichwohl eine sehr befriedigende Dichtwirkung entfalten. Bevorzugt ist das besagte Dichtelement gas- und insbesondere luftundurchlässig. Daneben kann dieses wenigstens eine Dichtelement auch sehr gut komprimiert werden, wenn es bereits in den Grundkörper eingearbeitet ist. Auch bei einer Vielzahl von Dichtelementen ist eine entsprechende Komprimierung gut möglich.

Bevorzugt ist das Dichtelement an den beiden Grundträgerabschnitten angeklebt.

Bei einer weiteren bevorzugten Ausführungsform ist wenigstens ein Abschnitt des Dichtelements mit einer pulverförmigen Substanz beschichtet. Bei einer weiteren vorteilhaften Ausführungsform ist das Dichtelement flexibel. Auch die Klebebeschichtung des Dichtelements ist besonders bevorzugt flexibel.

Bevorzugt weist das Dichtelement ein Trägernetz auf, an dem die Klebebeschichtungen angeordnet sind. Bei einer weiteren bevorzugten Ausführungsform ist der Klebstoff bevorzugt aus einer Gruppe von Klebstoffen ausgewählt, welche Acrylatkleber, insbesondere Acrylatkleber auf Dispersionsbasis, ggfs. auch auf Lösemittelbasis enthält. Zusätzlich können Synthese- und/oder Naturlatices verwendet werden.

Bei einer weiteren vorteilhaften Ausführungsform ragt wenigstens ein Abschnitt des Dichtelements über den Grundträgerabschnitt und/oder den Grundträger hinaus. Vorteilhaft ragt dieser Abschnitt des Dichtelements in einer zu der Längsrichtung senkrecht stehenden Richtung über den Grundträger hinaus. Bei einer weiteren vorteilhaften Ausführungsform ist dieser Abschnitt umgefaltet und besonders bevorzugt erstreckt sich dieser umgefaltete Abschnitt parallel zu der Längsrichtung des Grundkörpers. Besonders bevorzugt ist dieser umgefaltete Abschnitt an dem Grundträger angeklebt.

Bei einer weiteren vorteilhaften Ausführungsform ragen zwei Abschnitte über den Grundkörper hinaus und insbesondere ragen beide Abschnitte in der Querrichtung über den Grundkörper hinaus. Besonders bevorzugt ist auch dieser zweite Abschnitt an dem Grundkörper angeklebt. Damit befindet sich bevorzugt der Grundkörper und insbesondere beide Grundkörperabschnitte zwischen den besagten klebenden Abschnitten des Dichtelements. Auf diese Weise kann die Herstellung vereinfacht werden, da einerseits die Dimensionen des Dichtelements nicht exakt auf die Dimensionen des Grundkörpers angepasst werden müssen, und andererseits durch die nachträgliche Anklebung des Dichtelements an den Grundkörper auch der Zusammenhalt des gesamten Produkts verbessert wird.

Bevorzugt ist wenigstens einer der genannten (End-)Abschnitte um 90° umgefaltet und besonders bevorzugt beide (End-)Abschnitte.

Bevorzugt ist wenigstens eine Außenoberfläche des Abdichtbandes mit einer Klebebeschichtung versehen. Insbesondere handelt es sich dabei um eine Außenoberfläche, die parallel zu der Längsrichtung des Abdichtbandes verläuft. Besonders bevorzugt handelt es sich dabei um eine Außenoberfläche, die parallel senkrecht zu einer Ebene des Dichtelements verläuft (in einem unkomprimierten Zustand des Abdichtbandes. Bevorzugt ist eine Außenoberfläche des Abdichtbandes mit einer Klebebeschichtung versehen.

Besonders bevorzugt ist nur eine Außenoberfläche mit einer Klebebeschichtung, insbesondere in Form eines doppelseitigen Klebebandes versehen. Dieses doppelseitige Klebeband dient dabei bevorzugt als Montagehilfe.

Die vorliegende Erfindung ist weiterhin auf eine Vorrichtung zur Durchführung des oben beschriebenen Verfahrens gerichtet. Diese Vorrichtung weist dabei eine Transporteinrichtung auf, welche den Grundträger entlang eines vorgegebenen Transportpfades transportiert. Weiterhin weist die Vorrichtung eine Schneideeinrichtung auf, welche dazu geeignet und bestimmt ist, den Spalt in den Grundträger einzubringen, um so diesen Grundträger in zwei voneinander getrennte Grundträgerabschnitte aufzutrennen. Weiterhin ist vorteilhaft eine Einbringungseinrichtung vorgesehen, welche in den durch die Schneideinrichtung erzeugten Spalt das Dichtelement einbringt. Bevorzugt kann die Transporteinrichtung eine oder mehrere Umlenkrollen aufweisen.

Bevorzugt weist auch die Einbringungseinrichtung ein Fördermittel auf, welches das Dichtelement fördert. Dabei kann diese Einbringungseinrichtung auch ein Umlenkmittel aufweisen, welches die Transportrichtung des Dichtelements ändert. Es wäre jedoch auch möglich, dass die Transporteinrichtung zum Fördern des Grundträgers dessen Transportrichtung ändert.

Vorteilhaft ist dabei die Einbringrichtung auch die Umlenkrichtung, in welche das Dichtelement umgelenkt wurde. Mit anderen wird das Dichtelement in eine Bewegungsrichtung umgelenkt, welche auch der Transportrichtung des Grundkörpers entspricht.

Bei einer weiteren vorteilhaften Ausführungsform weist die Vorrichtung auch eine Trenneinrichtung auf, welche ein Abdeckmittel von dem Dichtelement entfernt. Dabei ist es beispielsweise möglich, dass das Dichtelement um eine Kante abgelenkt wird und durch dieses Ablenken sich auch der besagte Liner von dem Dichtelement löst.

Bei einer weiteren vorteilhaften Ausführungsform weist die Vorrichtung eine Aufwickeleinrichtung zum Aufwickeln des Liners auf.

Bei einer weiteren vorteilhaften Ausführungsform weist die Einbringeinrichtung einen schwertartigen Körper auf, der in den oben erwähnten Spalt zwischen den Grundträgerabschnitten hineinragt.

Bei einer weiteren vorteilhaften Ausführungsform weist die Vorrichtung eine Presseinrichtung auf, welche nach dem Einbringen des Dichtelements die Grundträgerabschnitte auf das Dichtelement zu presst. Bei einer weiteren bevorzugten Ausführungsform weist die Transporteinrichtung ein umlaufendes Transportmittel, wie etwa ein umlaufendes Transportband auf.

Diese Presseinrichtung kann dabei beispielsweise zwei Bänder aufweisen, die seitlich neben dem Grundträger verlaufen. Diese Bänder können in der Transportrichtung des Grundkörpers schräg bzw. leicht schräg (insbesondere verengend) angeordnet sein, so dass durch diese Transportbänder der Grundkörper in seiner Querrichtung zusammengedrückt wird. Damit handelt es sich bevorzugt bei der Presseinrichtung um eine angetriebene Presseinrichtung. Bevorzugt weist die Presseinrichtung wenigstens ein umlaufendes Band auf. Bevorzugt weist die Presseinrichtung zwei umlaufende Bänder auf, welche den Grundkörper zwischen sich aufnehmen. Es wäre jedoch auch möglich, dass die Presseinrichtung eine Vielzahl von Rollen aufweist, welche drehbar gelagert sind und zwischen denen der Grundträger gefördert wird. Auch kann dabei ein Abstand zwischen den besagten Rollen in der Querrichtung und in der Transportrichtung abnehmen, so dass auch durch diese Rollen die beiden Grundkörperabschnitte zusammengedrückt werden und auf diese Weise die Anhaftung erleichtert wird.

Daneben kann die Vorrichtung auch Niederhalteelemente bzw. Rollenelemente aufweisen, welche das Dichtelement auch in einer zu der Transportrichtung und der Höhenrichtung senkrecht stehenden Richtung presst. Die oben erwähnte Zusammenpresseinrichtung kann dabei beispielsweise bezüglich des Transportpfades des Grundträgers verlaufende Bänder aufweisen, welche insbesondere leicht schräg angeordnet sind, um so den Grundträger zwischen sich zumindest geringfügig zusammenzupressen. Vorteilhaft ist die Zusammenpresseinrichtung in Transportrichtung des Grundträgers stromabwärts von der Einbringeinrichtung angeordnet.

Bei einer weiteren vorteilhaften Ausführungsform ist die Einbringeinrichtung dazu geeignet und bestimmt, das Dichtelement umzulenken.

Bei einer weiteren vorteilhaften Ausführungsform weist die Vorrichtung auch eine Aufweitungseinrichtung zum Aufweiten des erzeugten Spalts auf. Dabei kann es sich beispielsweise um ein schwertartiges Element handeln, dessen Breite in der Querrichtung zumindest geringfügig in der Transportrichtung des Grundträgers zunimmt, um so den bereits gefertigten Spalt zu verbreitern.

Weitere Vorteile und Ausführungsformen ergeben sich aus den beigefügten Zeichnungen. Darin zeigen:
- Fig. 1: eine Darstellung eines Herstellungsverfahrens zur Herstellung eines er-findungsgemäßen Dichtbandes/Abdichtbandes;
- Fig. 2: eine Darstellung einer Einbringungseinrichtung zum Einbringen des Dichtelements in die Grundkörper;
- Fig. 3: eine schematische Darstellung eines erfindungsgemäßen Abdichtbandes; und
- Fig. 4: eine Detaildarstellung des Dichtelements.

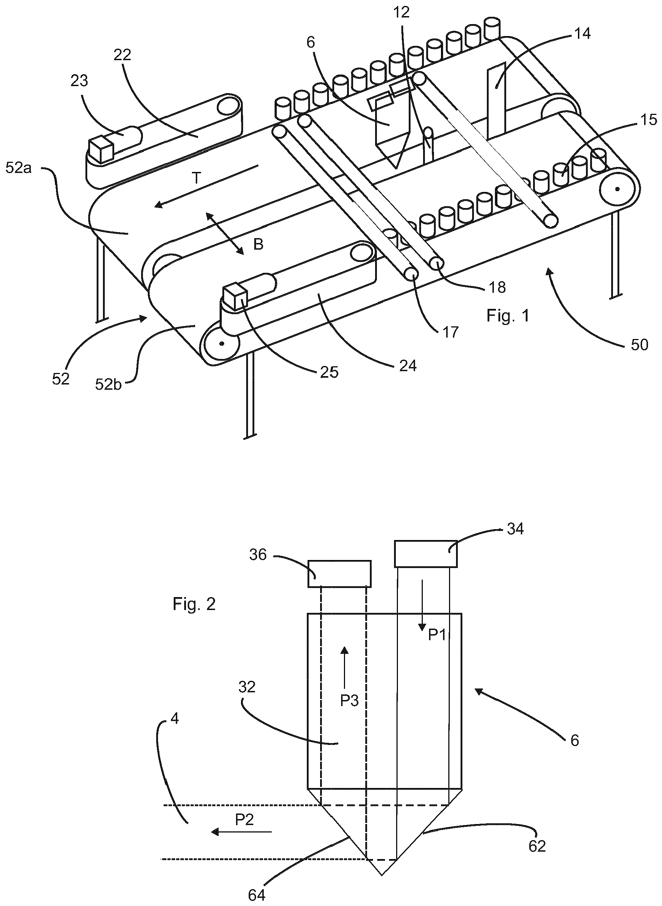

Figur 1 zeigt eine Darstellung zur Veranschaulichung eines Herstellungsverfahrens für ein erfindungsgemäßes Abdichtband. Dieses Abdichtband ist hier selbst nicht dargestellt, jedoch die Elemente, die dieses Abdichtband bearbeiten. Zunächst wird ein Grundkörper mit einer Transporteinrichtung, wie einem Transportband 52, in der Transportrichtung T gefördert. Dabei kann dieses Transportband zwei (parallel zueinander verlaufende) Transportbandabschnitte 52a und 52b aufweisen, die durch einen Spalt voneinander getrennt sind.

Das Bezugszeichen 14 kennzeichnet ein Schneidemittel, welches hier nur grob schematisch dargestellt ist und welches in den Grundkörper des später herzustellenden Abdichtbandes einen Spalt einbringt. Das Element 12, welches in der Transportrichtung T nach der Schneideeinrichtung 14 angeordnet ist, dient zum Aufweiten des entstehenden Spaltes. Dabei wäre es jedoch auch möglich, dass dieses Aufweitungsmittel bereits gemeinsam mit dem Schneidelement 14 ausgebildet ist. Auch kann sich das Schneidelement näher an der unten im Detail beschriebenen Einbringungseinrichtung 6 befinden.

Die Bezugszeichen 22 und 24 kennzeichnen Seitenführungsbänder, die jeweils von Antriebseinrichtung 23 und 25 angetrieben werden und die nach dem Einbringen des Spaltes und des Dichtelements dazu dienen, um den Grundkörper in der Breitenrichtung wieder zusammenzupressen.

Die Bezugszeichen 17 und 18 beziehen sich auf Niederhaltermittel, wie beispielsweise Rollen, unter denen das Transportband gefördert wird. Diese Rollen können dabei angetrieben oder passiv sein.

Die Bezugszeichen 15 beziehen sich auf seitliche Rollen, welche ebenfalls zur Führung des (nicht gezeigten) Grundkörpers dienen. Es wäre jedoch auch hier möglich, anstelle der Rollen Seitenführungsbänder vorzusehen.

Figur 2 zeigt eine detailliertere Darstellung der Einbringeinrichtung 6 zum Einbringen des Dichtelements in den Spalt. Dabei ist eine erste Rolle 34 vorgesehen, von welcher das Dichtelement 4, an dem noch ein Liner angeordnet ist, abgerollt wird. Dieses Dichtelement wird über eine erste Schrägkante 62 der Einbringeinrichtung 6 umgelenkt und in Figur 2 auf der Rückseite der Einbringeinrichtung gefördert. Mittels einer zweiten Umlenkkante 64 wird das Dichtelement (genauer dessen Liner) abermals umgelenkt und bei dieser Vorgehensweise wird der Liner 32 abgezogen. Über eine Rolle 36 wird der Liner wieder aufgewickelt. Das eigentliche Dichtelement 4 wird entlang des Pfeils P2 transportiert und in den Spalt zwischen den beiden Grundträgerabschnitten eingeführt. Dieser Bereich des Dichtelements 4 ist nunmehr beidseitig (Wenn das doppelseitige Klebeband an eine Seite der Grundbahn angetragen ist kann der Bereich des Dichtelements 4 noch beidseitig mit einem Klebemittel beschichtet sein. Das ist der Bereich erst nach dem Zusammenpressen der Bahn.) mit einem Klebemittel beschichtet und kann damit auch an die beiden Grundträgerabschnitte angebracht werden. Die Richtung des Pfeils P2 entspricht der in Fig. 1 gezeigten Transportrichtung T.

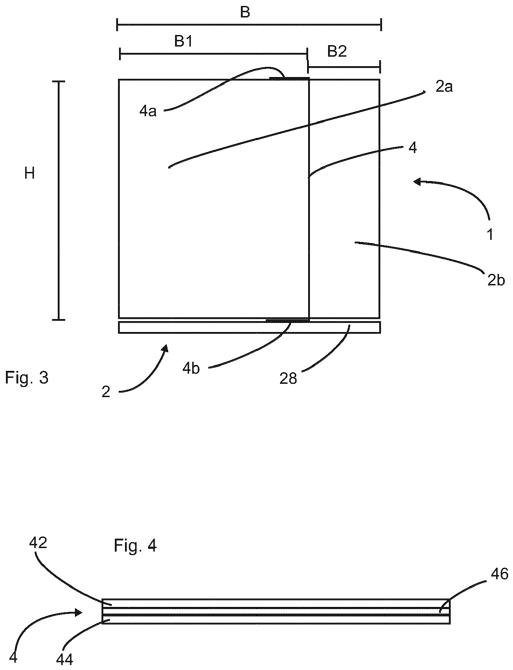

Figur 3 zeigt eine grob schematische Darstellung eines erfindungsgemäßen Abdichtbandes 1 in voll expandiertem Zustand. Dieses weist einen Grundkörper 2 auf, der durch das Schneidmittel in zwei Grundkörperabschnitte 2a und 2b aufgetrennt wurde. Zwischen diesen beiden Grundkörperabschnitten wird das Dichtelement 4 eingefügt. Die Abschnitte 4a und 4b zeigen Überstände, welche über den Grundkörper hinausragen. Wie oben erwähnt, werden dabei diese oberen und unteren Überstände 4a und 4b umgelegt und an den Grundkörper angelegt, an dem sie ankleben. Die jeweils nach außen gewandten Oberflächen dieser Abschnitte 4a und 4b werden - wie oben erwähnt - bepudert. Man erkennt, dass die Gesamtbreite B des Abdichtbandes 1 durch das Dichtelement nicht in zwei identische Teilbreiten B1 und B2 aufgetrennt geteilt wird, sondern in unterschiedliche Breiten (etwa 2/3 der Gesamtbreite und 1/3 der Gesamtbreite). Das Bezugszeichen 28 kennzeichnet ein doppelseitiges Klebeband, welches an einer Außenoberfläche des Grundkörpers (insbesondere nach dessen Fertigung) angebracht wird. Bevorzugt ist einer der beiden Überstände 4a, 4b, hier der Überstand 4b zwischen dem Grundkörper und diesem Klebeband 28 angeordnet.

Das Bezugszeichen H kennzeichnet die Höhenausdehnung des Abdichtbandes im voll expandierten Zustand. Nach dem Einbringen des Dichtelements wird - wie oben erwähnt - das Abdichtband in dieser Höhenrichtung H komprimiert. Die Transportrichtung T des Bandes erstreckt sich hier senkrecht zu der Figurenebene.

Figur 4 zeigt noch eine Darstellung des Dichtelements 4. Dieses weist einen vergleichsweise dünnen Grundträger 46 auf, bei dem es sich beispielsweise um ein Gewebe handeln kann. Dieser Grundträger ist zweiseitig mit einer Klebebeschichtung 42 und 44 beschichtet. Diese Klebebeschichtungen sollen wiederum sollen an den Grundträgerabschnitten des Grundträgers ankleben.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Abdichtband
- 2: Grundkörper
- 2a, 2b: Grundkörperabschnitte
- 4: Dichtelement
- 4a,4b: herausragende Abschnitte des Dichtelements
- 6: Einbringungseinrichtung
- 12: Element zum Aufweiten
- 14: Schneideeinrichtung
- 15: seitliche Rolle
- 17, 18: Niederhaltemittel
- 22, 24: Seitenführungsbänder
- 23, 25: Antriebe für Seitenführungsbänder
- 28: doppelseitiges Klebeband
- 32: Liner
- 34: erste Rolle
- 42,44: Klebebeschichtung
- 46: Grundträger des Dichtelements 4
- 50: Vorrichtung
- 52: Transportband
- 52a,52b: Transportbandabschnitte
- 62: Schrägkante
- 64: Umlenkkante

- B: Breite
- B1, B2: Teilbreiten
- T: Transportrichtung
- H: Höhe

## Patentansprüche

1. Verfahren zum Herstellen eines Abdichtbandes (1) mit den Schritten:
- Bereitstellen eines bandförmigen Grundträgers (2), wobei dieser Grundträger einen flexiblen Kunststoff aufweist;
- Transportieren dieses Grundträgers (2) entlang eines vorgegebenen Transportpfades (T);
- Einbringen wenigstens eines Spalts in diesen Grundträger (2), wobei sich dieser Spalt entlang der Transportpfads (T) erstreckt und wobei dieser Spalt den Grundträger in wenigstens zwei vollständig voneinander beabstandete Grundträgerabschnitte (2a, 2b) trennt;
**dadurch gekennzeichnet, dass**
in diesen Spalt ein Dichtelement (4) eingefügt wird, welches ein Trägermaterial (46) aufweist und beidseitig mit einer Klebebeschichtung (42,44) versehen ist.

2. Verfahren nach Anspruch 1,
**dadurch gekennzeichnet, dass**
wenigstens ein Grundträgerabschnitt (2a, 2b) und bevorzugt beide Grundträgerabschnitte an das Dichtelement (4) angedrückt werden.

3. Verfahren nach wenigsten einem der vorangegangenen Ansprüche,
**dadurch gekennzeichnet, dass**
vor und/oder während dem Einführen des Dichtelements (4) in den Spalt ein Abdeckelement (32) von diesem Dichtelements (4) abgetrennt wird.

4. Verfahren nach wenigsten einem der vorangegangenen Ansprüche,
**dadurch gekennzeichnet, dass**
der Spalt nach dem Einbringen durch ein Aufweitungsmittel aufgeweitet wird.

5. Verfahren nach wenigsten einem der vorangegangenen Ansprüche,
**dadurch gekennzeichnet, dass**
in einem Bereich, in dem das Dichtelement in den Spalt eingefügt wird, wenigstens der Grundträger (2) oder das Dichtelement entlang eines abgewinkelten oder gekrümmten Transportpfads (T) gefördert wird.

6. Verfahren nach wenigsten einem der vorangegangenen Ansprüche,
**dadurch gekennzeichnet, dass**
das Dichtelement (4) mittels eines Umlenkträgers (6) in den Spalt eingeführt wird, wobei das Dichtelement (4) um diesen Umlenkträger umgelenkt wird.

7. Verfahren nach Anspruch 6,
**dadurch gekennzeichnet, dass**
der Umlenkträger (6) in den Spalt hineinragt.

8. Verfahren nach wenigsten einem der vorangegangenen Ansprüche,
**dadurch gekennzeichnet, dass**
wenigstens ein Abschnitt des Dichtelements (4) nach dem Zusammenfügen mit den Grundträgerabschnitten (2a, 2b) über diese hinaussteht.

9. Abdichtband (1) mit einem Grundträger (2), der ein flexibles Schaumstoffmaterial aufweist, wobei sich dieser Grundträger entlang einer Längsrichtung (L) erstreckt und wobei zwei Grundträgerabschnitte (2a, 2b) durch ein Dichtelement (4) voneinander abgetrennt sind und sich dieses Dichtelement (4) ebenfalls in der Längsrichtung erstreckt,
**dadurch gekennzeichnet, dass**
das Dichtelement (4) ein Trägermaterial ( 46) aufweist, welches beidseitig mit einer Klebebeschichtung (42, 44) versehen ist, wobei die beiden Grundträgerabschnitte (2a, 2b) an diesem Dichtelement (4) anhaften.

10. Abdichtband (1) nach Anspruch 9,
**dadurch gekennzeichnet, dass**
wenigstens ein Abschnitt (4a, 4b) des Dichtelements (4) über den Grundträgerabschnitt (2a, 2b) hinausragt.

11. Vorrichtung (50) zur Durchführung eines Verfahrens nach wenigstens einem der vorangegangenen Ansprüche 1 - 8 mit einer Transporteinrichtung (52), welche den Grundträger (2) entlang eines vorgegebenen Transportpfads transportiert, mit einer Schneideeinrichtung (14), welche dazu geeignet und bestimmt ist, einen Spalt in den Grundträger (2) einzubringen und diesen Grundträger so in zwei voneinander getrennte Grundträgerabschnitte aufzutrennen, und mit einer Einbringungseinrichtung (6), welche in den durch die Schneideinrichtung (14) erzeugten Spalt das Dichtelement (4) einbringt.
